(19) **Europäisches Patentamt / European Patent Office / Office européen des brevets**

(11) **EP 3 776 691 B1**

(12) **EUROPEAN PATENT SPECIFICATION**

(45) Date of publication and mention
of the grant of the patent:
**04.06.2025 Bulletin 2025/23**

(21) Application number: **19781878.4**

(22) Date of filing: **02.04.2019**

(51) International Patent Classification (IPC):
*H01M 10/0525* (2010.01)    *H01M 50/42* (2021.01)
*H01M 50/426* (2021.01)    *H01M 50/429* (2021.01)
*H01M 50/403* (2021.01)

(52) Cooperative Patent Classification (CPC):
**H01M 10/0525; H01M 50/403; H01M 50/42;
H01M 50/426; H01M 50/4295; H01M 50/443;
H01M 50/449; H01M 50/457; H01M 50/489;
H01M 50/491;** Y02E 60/10

(86) International application number:
**PCT/CN2019/081002**

(87) International publication number:
**WO 2019/192474 (10.10.2019 Gazette 2019/41)**

(54) **COATING SLURRIES FOR PREPARING SEPARATORS, SEPARATORS FOR ELECTROCHEMICAL DEVICES AND PREPARATION METHODS THEREFOR**

BESCHICHTUNGSSCHLÄMME ZUR HERSTELLUNG VON SEPARATOREN, SEPARATOREN FÜR ELEKTROCHEMISCHE VORRICHTUNGEN UND HERSTELLUNGSVERFAHREN DAFÜR

SUSPENSIONS DE REVÊTEMENT POUR PRÉPARER DES SÉPARATEURS, SÉPARATEURS POUR DISPOSITIFS ÉLECTROCHIMIQUES ET PROCÉDÉS POUR LEUR PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.04.2018 CN 201810288160**

(43) Date of publication of application:
**17.02.2021 Bulletin 2021/07**

(73) Proprietor: **Shanghai Energy New Materials
Technology Co., Ltd.
Shanghai 201399 (CN)**

(72) Inventors:
• **CHENG, Alex**
  **Shanghai 201399 (CN)**
• **WANG, Lianjie**
  **Shanghai 201399 (CN)**

• **CHEN, Yongle**
  **Shanghai 201399 (CN)**
• **WANG, Zhixue**
  **Shanghai 201399 (CN)**
• **HUANG, Cancan**
  **Shanghai 201399 (CN)**
• **JIANG, Xianyou**
  **Shanghai 201399 (CN)**

(74) Representative: **Ipside
7-9 Allée Haussmann
33300 Bordeaux Cedex (FR)**

(56) References cited:
**EP-A1- 3 070 764      CN-A- 104 737 326
CN-A- 106 784 532      CN-A- 106 784 535
CN-A- 108 539 095      JP-A- 2002 216 734
US-A1- 2015 280 196**

EP 3 776 691 B1

**Description**

## CROSS REFERENCE TO RELATED APPLICATION

The present application claims the benefit of priority to Chinese Application No. 201810288160.9, filed on April 3, 2018.

## TECHNICAL FIELD

The present disclosure relates to electrochemistry field, and especially relates to coating slurries for preparing separators, separators for electrochemical devices and preparation methods therefor, as well as electrochemical devices comprising the separator

## BACKGROUND

With the growing market of energy storage, batteries and other forms of electrochemical devices are given more and more attentions. For example, lithium secondary batteries have been extensively used as energy sources in, for example, mobile phones, laptops, power tools, electrical vehicles, etc.

An electrode assembly of an electrochemical device usually comprises a positive electrode, a negative electrode, and a permeable membrane (i.e., separator) interposed between the positive electrode and the negative electrode. The positive electrode and the negative electrode are prevented from being in direct contact with each other by the separator, thereby avoiding internal short circuit. In the meanwhile, ionic charge carriers (e.g., lithium ions) are allowed to pass the separator through channels within the separator so as to close the current circuit. Separator is a critical component in an electrochemical device because its structure and properties can considerably affect the performances of the electrochemical device, including, for example, internal resistance, energy density, power density, cycle life, and safety.

A separator is generally formed by a polymeric microporous membrane. For example, polyolefin-based microporous membranes have been widely used as separators in lithium secondary batteries because of their favorable chemical stability and excellent physical properties. However, they may have low crystallinity degree, high swelling ratio, bad adhesive property and low melting temperatures, leading to high internal resistance, poor conductivity and fracture under a high temperature. Various techniques for improving the chemical and physical properties of polyolefin-based separators have been disclosed, including, for example, forming a porous coating layer on a polyolefin microporous membrane to prepare a coated separator. The porous coating layer may improve the adhesive property and/or heat-resistance of the coated separator. The preparation method and composition of the porous coating layer can affect many properties of the coated separator. The porous coating layer usually comprises at least one polymer, e.g., polyvinylidene fluoride (PVDF) homopolymers or copolymers. Nowadays, PVDF-co-HFP is a commonly used PVDF copolymer, but such coating layer and the coated separator prepared using PVDF-co-HFP may have low crystallinity degree, high swelling ratio, and bad adhesive property, leading to high internal resistance, poor cycle performance, and other poor electrochemical chemical device properties.

In addition, copolymers of vinylidene fluoride and hexafluoropropylene are generally classified into aqueous systems and nonaqueous systems. Nonaqueous systems may cause pollutions and involve complicated technical processes. Therefore, separators coated with aqueous-system based polymers are also important. Comparing to separators with aqueous-system based ceramic coating layers, separators with aqueous-system based polymer coating layers have much better binding capability and can bind pole pieces, electrodes, and separators together. Accordingly, the battery with aqueous-system based polymer coated separators can be stronger and the assembly of the battery can be more convenient. In addition, such battery can have a smaller internal resistance and a better cycle performance.

Therefore, there is a need to develop advanced aqueous-system based polymer coating layers, coated separators, and preparation methods therefor to meet the increasing demand on separators having improved properties, such as good adhesiveness, high crystallinity degree, and low swelling ratio, and causing less pollution comparing to nonaqueous systems, to be used in various high-performance electrochemical devices.

US2015/280196A1 discloses a separator having a high ion conductivity and excellent durability, and a secondary battery. The separator includes a layer that includes a fluoropolymer including a polymer unit based on vinylidene fluoride and a polymer unit based on tetrafluoroethylene, and a porous membrane. The fluoropolymer includes 80.0 to 89.0 mol % of the polymer unit based on vinylidene fluoride in all the polymer units, and has a weight average molecular weight of 50000 to 2000000.

EP3070764A1 similarly discloses a separator for secondary batteries which has excellent heat resistance and ion conductivity, which is less likely to be heat-shrunk, which is less likely to swell with an electrolyte solution even at high temperatures, and in which a composite porous membrane including a binder polymer and at least one type of inorganic particles selected from the group consisting of metal oxide particles and metal hydroxide particles firmly bonds to a porous body. The separator includes a porous substrate; and a composite porous membrane disposed on or above the porous substrate. The composite porous membrane includes: a fluoropolymer that includes a polymerized unit based on vinylidene fluoride and a polymerized unit based on tetrafluoroethylene; and at least one type of inorganic particles selected from the group consisting of metal oxide particles and metal hydroxide particles. The fluoropolymer includes 40 mol% or more of the polymerized unit based on vinylidene fluoride in all the polymerized units and having a weight average molecular weight of 200,000 to 2,000,000. The fluoropolymer is present in an amount of 50 mass% or less in the composite porous membrane.

## SUMMARY OF THE INVENTION

The present disclosure provides a coating slurry for preparing a separator for an electrochemical device. The coating slurry comprises at least one copolymer having a crystallinity degree ranging, for example, from 30% to 70%, measured according to a differential scanning calorimetry (DSC); at least one thickening agent, at least one binder, and water, wherein the at least one copolymer comprises a first structural unit and at least one second structural unit; the first structural unit is derived from tetrafluoroethylene and the at least one second structural unit is derived from an entity chosen from vinylidene fluoride, acrylic acid methacrylic acid, methyl acrylate, ethyl acrylate, methacrylates, 2-chloroethyl vinyl ether, 2-ethylhexyl acrylate, hydroxyethyl methacrylate, butyl acrylate, butyl methacrylate, trimethylolpropane triacrylate (TMPTA); the at least one copolymer comprises from 0.1 wt% to 20 wt% of the first structural unit derived from tetrafluoroethylene based on the total weight of the at least one copolymer; wherein the at least one thickening agent comprises polypropylene glycol and sodium carboxymethyl cellulose; and wherein the coating slurry is absent of inorganic fillers.

The present disclosure further provides a method for preparing the coating slurry disclosed herein, comprising mixing the at least one copolymer, the thickening agent, and water to obtain a first mixture; and adding the at least one binder into the first mixture.

The present disclosure further provides a method for preparing a separator for an electrochemical device using the coating slurry disclosed herein. Specifically, the method comprises: preparing the coating slurry disclosed herein; applying the coating slurry on at least one side of a porous base membrane to obtain a wet coating layer; and removing water from the wet coating layer.

The present disclosure further provides a separator for an electrochemical device prepared by the method disclosed herein. Specifically, the separator disclosed herein comprises a porous base membrane and a coating layer being formed on at least one side of the porous base membrane.

The present disclosure further provides an electrochemical device comprising a positive electrode, a negative electrode, and the separator disclosed herein interposed between the positive electrode and the negative electrode.

## DETAILED DESCRIPTION

The present disclosure provides some exemplary embodiments of a coating slurry for preparing a separator for electrochemical devices. In some embodiments of the present disclosure, the coating slurry disclosed herein comprises at least one copolymer, at least one thickening agent, at least one binder, and water, wherein the at least one copolymer is dispersed in the water.

The at least one copolymer disclosed herein may have a crystallinity degree ranging, for example, from 30% to 70%, such as from 40% to 60%. Crystallization of polymers is a process associated with partial alignment of their molecular chains. These chains fold together and form ordered regions called lamellae, which compose larger spheroidal structures named spherulites. Crystallization affects optical, mechanical, thermal and chemical properties of the polymer. The crystallinity degree can be determined by different analytical methods. As disclosed herein, the crystallinity degree of the at least one copolymer is measured by a differential scanning calorimetry (DSC). The at least one copolymer disclosed herein can swell in an nonaqueous electrolyte, and it may have a swelling ratio, which is also called as swelling degree, ranging, for example, from 5% to 30%, such as from 10% to 20%. The swelling ratio disclosed herein is a parameter to characterize the weight change of the at least one copolymer after swelling, which can be calculated by:

$$\text{swelling ratio (\%)} = (W_s - W_d) / W_d \times 100,$$

wherein $W_d$ is the weight of the at least one copolymer before swelling, and $W_s$ is the weight of the swollen copolymer obtained by immersing the at least one copolymer in a nonaqueous electrolyte for seven days, wherein the nonaqueous electrolyte is a mixture of ethylene carbonate (EC), diethyl carbonate (DEC), and dimethyl carbonate (DMC) with a weigh ration of EC: DEC: DMC = 1: 1: 1.

If a polymer having a crystallinity degree lower than 30% and a swelling ratio higher than 30% is used in a coating slurry for preparing a separator, the prepared separator may have a large increase in its dimension when impregnated by a nonaqueous electrolyte, leading to a decrease in adhesiveness. When the separator having weak adhesiveness or binding property is used to prepare an electrochemical device, the electrochemical device may have high internal resistance and bad cycle life. Such issues can be solved by employing a polymer material having relatively high crystallinity degree and relatively low swelling ratio in the coating slurry for preparation of the separator. The coating slurry of the present disclosure comprises at least one copolymer having relatively high crystallinity degree and relatively low swelling ratio, so the separator prepared by the coating slurry may have strong binding property.

Different types of the at least one copolymer in the coating slurry may affect the adhesiveness of the coating layer formed by the coating slurry. In some embodiments of the present disclosure, the at least one copolymer disclosed herein may comprise a first structural unit and at least one second structural unit. In some embodiments, the first structural unit may be derived from tetrafluoroethylene (TFE) . In some embodiments, the at least one second structural unit derived from an entity chosen from vinylidene fluoride, acrylic acid, methacrylic acid, methyl acrylate, ethyl acrylate, methacrylates, 2-chloroethyl vinyl ether, 2-ethylhexyl acrylate, hydroxyethyl methacrylate, butyl acrylate, butyl methacrylate, trimethylolpropane triacrylate (TMPTA) . In some embodiments, the at least one second structural unit is a second structural unit derived from vinylidene fluoride. In some embodiments, the at least one copolymer disclosed herein may be chosen from polyvinylidene fluoride-co-tetrafluoroethylene (PVDF-co-TFE) , polytetrafluoroethylene-co-acrylic acid (PTFE-co-PAA) , polytetrafluoroethylene-co-methyl methacrylate (PTFE-co-PMMA) , and PVDF-co-CTFE.

The weight percentage of the first structural unit in the copolymer may affect the crystallinity degree and swelling ratio of the copolymer. In some embodiments, the weight percentage of the first structural unit in the copolymer may range, for example, from 0.1 wt% to 20 wt%, such as from 3 wt% to 15 wt%, and further such as from 5 wt% to 10 wt%.

The at least one copolymer disclosed herein may be in a form of particles. The particle size of the at least one copolymer can affect the properties of the coating layer made from the coating slurry disclosed herein. In some embodiments, the at least one copolymer disclosed herein is in a form of particles, which have a particle size ranging, for example, from 0.1 μm to 20 μm, such as from 2 μm to 10 μm.

In some embodiments of the present disclosure, the coating slurry further comprises at least one homopolymer chosen, for example, from PVDF homopolymer, meta-aramid, and para-aramid. If meta-aramid or para-aramid is included in the coating slurry, the separator made from the coating slurry may have improved heat-resistance.

The coating slurry disclosed herein may comprise, for example, from 5 wt% to 30 wt%, such as from 10 wt% to 20 wt% of solid matter. The solid matter disclosed herein comprises all ingredients in the coating slurry except water. The solid matter may comprise, for example, from 70 wt% to 90 wt%, such as from 75 wt% to 85 wt%, of the at least one copolymer, from 1.5 wt% to 4 wt%, such as from 2 wt% to 3 wt%, of the at least one thickening agent, and from 1 wt% to 6 wt%, such as from 2 wt% to 4 wt%, of the at least one binder.

The at least one thickening agent disclosed herein may be chosen, for example, from sodium carboxymethyl cellulose, polypropylene glycol (PPG) , sodium hydroxymethyl cellulose, methyl cellulose, carboxymethyl cellulose (CMC) , hydroxy ethyl cellulose, hydroxypropyl methylcellulose, hydroxymethyl cellulose, and salts thereof. The salts include, for example, sodium salts of carboxymethyl cellulose (CMC-Na) or hydroxy methyl cellulose.

In one embodiment of the present disclosure, the coating slurry comprises PPG and CMC-Na as thickening agents. For example, the solid matter of the coating slurry may comprise from 0.5 wt% to 2 wt%, such as from 1 wt% to 1.5 wt%, of PPG and from 1 wt% to 2 wt%, such as from 1.2 wt% to 1.8 wt%, of CMC-Na based on the total weight of the solid matter.

The at least one binder disclosed herein may be chosen, for example, from polyacrylic acid, polymethacrylic acid, polymethyl acrylate, polyethyl acrylate, pure acrylate emulsion, poly [ (acrylic acid) -co-styrene] , polyvinyl pyrrolidone, styrene-butadiene rubber, epoxy resin, neopentyl glycol diacrylate, sodium polyacrylate, polytetrafluoroethylene, polyimide, polyamide, polyester, cellulose derivatives and polysulfone.

In some embodiments of the present disclosure, the coating slurry may further comprise at least one wetting agent, at least one dispersant and/or at least one antifoaming agent. In such a case, the coating slurry may comprise, for example, from 5 wt% to 30 wt%, such as from 10 wt% to 20 wt%, of the solid matter, and the solid matter may comprise from 70 wt% to 90 wt%, such as from 75 wt% to 85 wt%, of the at least one copolymer, from 1.5 wt% to 4 wt%, such as from 2 wt% to 3 wt%, of the at least one thickening agent, from 1 wt% to 6 wt%, such as from 2 wt% to 4 wt%, of the at least one binder, from 0.5 wt% to 1.5 wt%, such as from 0.8 wt% to 1.2 wt% of the at least one wetting agent, and from 0.5 wt% to 5 wt%, such as from 2 wt% to 4 wt%, of the at least one dispersant. The coating slurry disclosed herein may be prepared by mixing the at least one copolymer, the thickening agent, and water to obtain a first mixture, and then adding the at least one dispersant and/or the at least one antifoaming agent, the at least one binder, and the at least one wetting agent into the first mixture successively.

The at least one wetting agent disclosed herein may be a surfactant chosen, for example, from sulfonated oil, fatty acid salt, sodium alkyl naphthalene sulfonate, soya bean lecithin, thiol, hydrazide and mercaptal.

The at least one dispersant disclosed herein may be chosen, for example, from silicate, alkali phosphate, triethyl hexyl phosphate, sodium dodecyl sulfate, methylpentanol, cellulose derivative, polyacrylamide, guar gum and fatty acid polyglycol ester. An example of the silicate is sodium silicate. The alkali phosphate disclosed herein may be at least one of sodium tripolyphosphate, sodium hexametaphosphate, and sodium pyrophosphate.

The at least one antifoaming agent disclosed herein may be chosen, for example, from glyceryl monostearate, polyoxyethylene glyceryl ether, polyoxypropylene glyceryl ether, polyacrylate, polymethacrylate, emulsified silicone oil, long chain fatty acid ester complex, polyoxyethylene polyoxypropylene pentaerythritol ether, polyoxyethylene polyoxypropylene ether, and polydimethylsiloxane.

The present disclosure further provides some exemplary embodiments of a method for making a separator for an electrochemical device using the coating slurry disclosed herein. In one embodiment, the method disclosed herein comprises:

(A) preparing a coating slurry disclosed herein, comprising at least one copolymer and at least one solvent;
(B) applying the coating slurry on at least one side of a porous base membrane to obtain a wet coating layer; and
(C) removing the at least one solvent from the wet coating layer.

In step (A), as discussed above, the coating slurry may be prepared by mixing the at least one copolymer, the at least one thickening agent, the at least one binder, water, and optional components to obtain a mixture. The coating slurry may be a suspension at least because the at least one copolymer disperses in the water.

The coating slurry disclosed herein may, for example, be prepared by mixing all the ingredients, i.e., the at least one copolymer, the at least one thickening agent, the at least one binder, and water. The adding sequence of the ingredients may affect the properties of the coating slurry. In one embodiment, the coating slurry is prepared by:

(A1) mixing the at least one copolymer and the at least one thickening agent to obtain a first mixture;
(A2) dispersing the first mixture in water to obtain a second mixture;
(A3) adding the at least one binder into the second mixture; and
(A4) optionally adding the at least one wetting agent into the second mixture.

In step (A1), the mixing of the at least one copolymer and the at least one thickening agent may be conducted by stirring and/or kneading to obtain a paste, i.e., the first mixture. After the mixing, the at least one thickening agent may be wrapped by the at least one copolymer.

In step (A2), the first mixture is dispersed in the water to obtain the second mixture. The dispersion may be conducted by, for example, stirring, kneading, or grinding. In some embodiments, to enhance the dispersion of the first mixture, at least one dispersant and/or at least one antifoaming agent disclosed above may be added into the water.

In step (B), the coating slurry prepared in step (A) is applied on at least one side of the porous base membrane. Any coating method known in the art may be used to coat the porous base membrane with the coating slurry, such as roller coating, spray coating, dip coating, spin coating, or combinations thereof. Examples of the roller coating include gravure coating, silk screen coating, and slot die coating. The coating speed may be controlled in a range of, for example, from 5 to 100 m/min, such as from 15 to 80 m/min. In the case that both sides of the porous base membrane are coated with the coating slurry, the both sides can be coated simultaneously or by sequence.

In step (C), the water can be removed from the wet coating layer through a method known in the art, such as a thermal evaporation, a vacuum evaporation, or a combination thereof. When the at least one solvent is removed, a dry coating layer having a porous structure can be formed.

The thermal evaporation disclosed herein may be carried out in a closed oven or an open oven. For example, passing the coated porous base membrane through a multi-stage open oven, e.g., a three-stage oven, in a predetermined speed. The three-stage oven may have a temperature ranging from 45 to 55°C in its first stage, a temperature ranging from 55 to 65°C in its second stage, and a temperature ranging from 50 to 60°C in its third stage. In an example, the three-stage oven has temperatures of 50°C, 60°C, and 55°C in its first, second, and third stages respectively. Water can also be removed through a combination of thermal evaporation and vacuum evaporation. For example, the porous base membrane coated with the coating slurry may be subjected to a vacuum oven for a predetermined time period so as to remove water from the wet coating layer. The pressure and temperature of the vacuum oven may depend on the amount of water to be removed.

By the method disclosed herein, a dry and porous coating layer may be formed on at least one side of the porous base membrane. The separator prepared by the methods disclosed above comprises a porous base membrane and a coating layer being formed on at least one side of the porous base membrane.

The "at least one side" disclosed herein means the coating layer is disposed on one side or both sides of the porous base membrane, and the coating layer can be in direct contact or not in direct contact with the porous base membrane. The separator disclosed herein may have a laminated structure. In some embodiments of the present disclosure, the coating layer is in direct contact with the porous base membrane, i.e., the coating layer is formed directly on at least one surface of the porous base membrane. In some embodiments, the separator disclosed herein may have a two-layer structure when only one surface of the porous base membrane is coated with the coating layer. The separator may have a three-layer structure when both surfaces of the porous base membrane are coated with the coating layer. In some other embodiments, the coating layer is not in direct contact with the porous base membrane, i.e., the separator disclosed herein further comprise at least one additional layer (e.g., an adhesive layer) interposed between the coating layer and the porous base membrane. In yet another embodiment, the separator disclosed herein may further comprise at least one additional layer (e.g., an adhesive layer) disposed on the outer surface of the coating layer.

The coating layer disclosed herein has a pore structure allowing gas, liquid, or ions pass from one surface side to the other surface side of the coating layer. The average size of the pores within the coating layer may range, for example, from 0.1 to 100 $\mu$m, such as from 1 to 10 $\mu$m. The porosity of the coating layer may range, for example, from 10% to 60%, such as from 20% to 40%. The coating layer may have an air permeability ranging, for example, from 50 to 400 sec/100ml, such as from 100 to 250 sec/100ml. Additionally, the coating layer on one side of the porous base membrane may have a thickness ranging, for example, from 0.5 to 5 $\mu$m, such as from 2 to 4 $\mu$m.

The porous base membrane disclosed herein may have a thickness ranging, for example, from 0.5 to 50 $\mu$m, such as from 0.5 to 20 $\mu$m, and further such as from 5 to 18 $\mu$m. The porous base membrane may have numerous pores inside, through which gas, liquid, or ions can pass from one surface side to the other surface side.

In some embodiments of the present disclosure, polyolefin-based porous membranes are used as the porous base membrane. Examples of polyolefin contained in the polyolefin-based porous membrane may include polyethylene (PE), high density polyethylene (HDPE), polypropylene (PP), polybutylene, polypentene, polymethylpentene (TPX), copolymers thereof, and mixtures thereof. The polyolefin disclosed herein may have a weight average molecular weight (Mw) ranging, for example, from 50,000 to 2,000,000, such as from 100,000 to 1,000,000. The pores within the polyolefin-based porous base membrane may have an average pore size ranging, for example, from 20 to 70 nm, such as from 30 to 60 nm. The polyolefin-based porous base membrane may have a porosity ranging, for example, from 25% to 50%, such as from 30% to 45%. Furthermore, the polyolefin-based porous base membrane may have an air permeability ranging, for example, from 50 to 400 sec/100ml, such as from 80 to 300 sec/100ml. In addition, the polyolefin-based porous membrane may have a single-layer structure or a multi-layer structure. A polyolefin-based porous membrane of the multi-layer structure may include at least two laminated polyolefin-based layers containing different types of polyolefin or a same type of polyolefin having different molecular weights. The polyolefin-based porous membrane disclosed herein can be prepared according to a method known in the art or be purchased directly in the market.

In some other embodiments, a non-woven membrane may form at least one portion of the porous base membrane. The term "non-woven membrane" means a flat sheet including a multitude of randomly distributed fibers that form a web structure therein. The fibers generally can be bonded to each other or can be unbonded. The fibers can be staple fibers (i.e., discontinuous fibers of no longer than 10 cm in length) or continuous fibers. The fibers can comprise a single material or a multitude of materials, either as a combination of different fibers or as a combination of similar fibers each comprised of different materials. Examples of the non-woven membrane disclosed herein may exhibit dimensional stability, i.e., thermal shrinkage of less than 5% when heated to 100°C for about two hours. The non-woven membrane may have a relatively large average pore size ranging, for example, from 0.1 to 20 $\mu$m, such as from 1 to 5 $\mu$m. The non-woven membrane may have a porosity ranging, for example, from 40% to 80%, such as from 50% to 70%. Furthermore, the non-woven membrane may have an air permeability of, for example, less than 500 sec/100ml, such as ranging from 0 to 400 sec/100ml, and further such as ranging from 0 to 200 sec/100ml. Some examples of the non-woven membrane are formed of one chosen from polyethylene (PE), high density polyethylene (HDPE), polypropylene (PP), polybutylene, polypentene, polymethylpentene (TPX), polyethylene terephthalate (PET), polyamide, polyimide (PI), polyacrylonitrile (PAN), viscose fiber, polyester, polyacetal, polycarbonate, polyetherketone (PEK), polyetheretherketone (PEEK), polybutylene terephthalate (PBT), polyethersulfone (PES), polyphenylene oxide (PPO), polyphenylene sulfide (PPS), polyethylene naphthalene (PEN), cellulose fiber, copolymers thereof, and mixtures thereof. In an example, a non-woven membrane formed of PET is used as the porous base membrane. The non-woven porous membrane disclosed herein can be prepared according to a method known in the art, such as electro-blowing, electro-spinning, or melt-blowing, or be purchased directly in the market.

There is no particular limitation for the thickness of the separator disclosed herein, and the thickness of the separator can be controlled in view of the requirements of electrochemical devices, e.g., lithium-ion batteries.

The coating slurry disclosed herein is an aqueous slurry, in which no organic solvent is used. Therefore, the preparation process of the separator disclosed herein is environmental-friendly. The separator disclosed herein comprises a coating layer on at least one side of the porous base membrane, comprising at least one copolymer of relatively high crystallinity degree and relatively low swelling ratio. With the presence of the at least one copolymer in the coating layer, the separator can have excellent adhesive property and good contact interface with the electrodes, even after it is impregnated with a nonaqueous electrolyte. Thus the electrochemical devices employing the separator of the present disclosure may have improved mechanical strength, low internal resistance, and improved cycle performance. The separators disclosed herein can have a wide range of applications and can be used for making high-energy density and/or high-power density batteries in many stationary and portable devices, e.g., automotive batteries, batteries for medical devices, and batteries for other large devices.

The present disclosure further provides embodiments of an electrochemical device, comprising a positive electrode, a negative electrode, and a separator disclosed herein that is interposed between the positive electrode and the negative electrode. An electrolyte may be further included in the electrochemical device of the present disclosure. The separator is sandwiched between the positive electrode and the negative electrode to prevent physical contact between the two electrodes and the occurrence of a short circuit. The porous structure of the separator ensures a passage of ionic charge carriers (e.g., lithium ions) between the two electrodes. In addition, the separator may also provide a mechanical support to the electrochemical device. Such electrochemical devices include any devices in which electrochemical reactions occur. For example, the electrochemical device disclosed herein includes primary batteries, secondary batteries, fuel cells, solar cells and capacitors. In some embodiments, the electrochemical device disclosed herein is a lithium secondary battery, such as a lithium ion secondary battery, a lithium polymer secondary battery, a lithium metal secondary battery, a lithium air secondary battery and a lithium sulfur secondary battery. With the separator of the present disclosure inside, the electrochemical device disclosed herein can exhibit improved cycle life as discussed above.

The electrochemical device disclosed herein may be manufactured by a method known in the art. In one embodiment, an electrode assembly is formed by placing a separator of the present disclosure between a positive electrode and a negative electrode, and an electrolyte is injected into the electrode assembly. The electrode assembly may be formed by a process known in the art, such as a winding process or a lamination (stacking) and folding process.

Reference is now made in detail to the following examples. It is to be understood that the following examples are illustrative only and the present disclosure is not limited thereto.

Example 1

A PVDF-co-TFE containing 5 wt% structural units derived from TFE and 95 wt% structural units derived from vinylidene fluoride was prepared. 0.9 kg of the PVDF-co-TFE, 1.6 kg of CMC-Na (1wt%, solvent: water) , and 0.075 kg of PPG solution (12wt%, solvent: water) were mixed with an eggbeater and kneaded to obtain a paste. The paste was added into 17.25 kg water to obtain a first mixture. The first mixture was stirred and ground with a grinding machine for three times. Then 0.17 kg polyacrylic acid as a binder and 0.12 kg disodium lauryl sulfosuccinate as a wetting agent were added into the first mixture to obtain a coating slurry having a solid content of 5 wt%.

A PE membrane having a thickness of 12 $\mu$m was used as a porous base membrane. The coating slurry prepared above was coated on one surface of the PE membrane through a gravure coating process at a speed of 30 m/min. The coated PE membrane was dried by passing through a three-stage oven having temperatures of 50°C, 60°C and 55°C, respectively, in the first, the second and the third stage thereof. A separator having a thickness of 13 $\mu$m was prepared.

A lithium-ion battery was made by placing the above prepared separator between lithium manganese oxide (LiMn2 O4 ) as positive electrode and artificial graphite as negative electrode, and injecting an electrolyte mixture of ethylene carbonate (EC) , diethyl carbonate (DEC) , and dimethyl carbonate (DMC) with a weight ratio of EC: DEC: DMC=1: 1: 1.

Example 2

A PVDF-co-TFE containing 10 wt% structural units derived from TFE and 90 wt%structural units derived from vinylidene fluoride was prepared. 1.63 kg of the PVDF-co-TFE, 2.88 kg of CMC-Na (1 wt%, solvent: water) , and 0.136 kg of PPG solution (12 wt%, solvent: water) were mixed with an eggbeater and kneaded to obtain a paste. The paste was added into 15 kg water to obtain a first mixture. The first mixture was stirred and ground with a grinding machine for three times. Then 0.3 kg polyacrylic acid as a binder and 0.15 kg disodium lauryl sulfosuccinate as a wetting agent were added into the first mixture to obtain a coating slurry having a solid content of 9 wt%.

The same procedures as set forth above in Example 1 were used to prepare a separator and a lithium-ion battery. The separator had a thickness of 14 $\mu$m and its coating layer had a thickness of 2 $\mu$m.

Example 3

A PVDF-co-TFE containing 15 wt% structural units derived from TFE and 85 wt% structural units derived from vinylidene fluoride was prepared. 3.5 kg of the PVDF-co-TFE, 2.5 kg of CMC-Na (1 wt%, solvent: water) , and 0.6 kg of PPG solution (12 wt%, solvent: water) were mixed with an eggbeater and kneaded to obtain a paste. The paste and 0.6kg polyacrylamide as a dispersant were added into 10 kg water to obtain a first mixture. The first mixture was stirred and ground with a grinding machine for three times. Then 0.6 kg polyacrylic acid as a binder and 0.13 kg disodium lauryl sulfosuccinate as a wetting agent were added into the first mixture to obtain a coating slurry having a solid content of 19 wt%.

The same procedures as set forth above in Example 1 were used to prepare a separator and a lithium-ion battery.

The separator had a thickness of 14 μm and its coating layer had a thickness of 2 μm.

Comparative Example 1

A PVDF-co-HFP containing 5 wt% structural units derived from hexafluoropropylene (HFP) and 95 wt% structural units derived from vinylidene fluoride was prepared. 0.9 kg of the PVDF-co-HFP, 1.6 kg of CMC-Na (1 wt%, solvent: water) , and 0.075 kg of PPG solution (12 wt%, solvent: water) were mixed with an eggbeater and kneaded to obtain a paste. The paste was added into 17.25 kg water to obtain a first mixture. The first mixture was stirred and ground with a grinding machine for three times. Then 0.17 kg polyacrylic acid as a binder and 0.12 kg disodium lauryl sulfosuccinate as a wetting agent were added into the first mixture to obtain a coating slurry having a solid content of 5 wt%.

The same procedures as set forth above in Example 1 were used to prepare a separator and a lithium-ion battery. The separator had a thickness of 13 μm and its coating layer had a thickness of 1 μm.

Comparative Example 2

A PVDF-co-HFP containing 10 wt% structural units derived from hexafluoropropylene (HFP) and 90 wt% structural units derived from vinylidene fluoride was prepared. 2.17 kg of the PVDF-co-HFP, 3.84 kg of CMC-Na (1 wt%, solvent: water), and 0.181 kg of PPG solution (12 wt%, solvent: water) were mixed with an eggbeater and kneaded to obtain a paste. The paste was added into 13.5 kg water to obtain a first mixture. The first mixture was stirred and ground with a grinding machine for three times. Then 0.4 kg polyacrylic acid as a binder and 0.15 kg disodium lauryl sulfosuccinate as a wetting agent were added into the first mixture to obtain a coating slurry having a solid content of 12 wt%.

The same procedures as set forth above in Example 1 were used to prepare a separator and a lithium-ion battery. The separator had a thickness of 14 μm and its coating layer had a thickness of 2 μm.

Comparative Example 3

A PVDF-co-HFP containing 15 wt% structural units derived from hexafluoropropylene (HFP) and 85 wt% structural units derived from vinylidene fluoride was prepared. 3.2 kg of the PVDF-co-HFP, 2.5 kg of CMC-Na (1 wt%, solvent: water) , and 0.6 kg of ? ? as a dispersant were added into 10 kg water to obtain a first mixture. The first mixture was stirred and ground with a grinding machine for three times. Then 1 kg polyacrylic acid as a binder and 0.15 kg disodium lauryl sulfosuccinate as a wetting agent were added into the first mixture to obtain a coating slurry having a solid content of 31 wt%.

The same procedures as set forth above in Example 1 were used to prepare a separator and a lithium-ion battery. The separator had a thickness of 14 μm and its coating layer had a thickness of 2 μm.

Comparative Example 4

A PVDF-co-TFE containing 5 wt% structural units derived from TFE and 95 wt% structural units derived from vinylidene fluoride was prepared. 0.9 kg of the PVDF-co-TFE, 1.6 kg of CMC-Na (1 wt%, solvent: water), and 0.075 kg of PPG solution (12 wt%, solvent: water) were mixed with an eggbeater and kneaded to obtain a paste. 0.5 kg alumina powder was dispersed in 17.25 kg water, and then the paste was added to obtain a first mixture. The first mixture was stirred and ground with a grinding machine for three times. Then 0.17 kg polyacrylic acid as a binder and 0.12 kg disodium lauryl sulfosuccinate as a wetting agent were added into the first mixture to obtain a coating slurry having a solid content of 5.5 wt%.

The same procedures as set forth above in Example 1 were used to prepare a separator and a lithium-ion battery. The separator had a thickness of 13 μm and its coating layer had a thickness of 1 μm.

The copolymers, the separators, and the lithium-ion batteries of Examples 1-3 and Comparative Examples 1-4 were tested using the following methods.

Crystallinity degree of the copolymer was tested using a differential scanning calorimetry with a model number of TA DSC Q2000.

Swelling ratio of the copolymer was tested according to the following method. The copolymer was dissolved in DMAC firstly, and then the DMAC was removed by extraction with water to obtain a porous membrane. The porous membrane was cut into a sample and the sample was weighed. The sample was then immersed in a nonaqueous electrolyte mixture of ethylene carbonate (EC) , diethyl carbonate (DEC) , and dimethyl carbonate (DMC) in a weight ratio of EC: DEC: DMC=1: 1: 1 for seven days to obtain a swollen sample, which was weighed. The swelling ratio of the copolymer was calculated by:

$$\text{swelling ratio } (\%) = (Ws - Wd) / Wd \times 100 \ (\%) \ ,$$

wherein Wd is the weight of the sample before swelling, and Ws is the weight of the swollen sample.

Interface adhesiveness of the separator was tested according to the following method. The separator was cut into samples of 25 mm width and 100 mm length; hot pressing two samples of the separator were stacked and hot pressed at 1 MPa, 100°C with a speed of 10 m/min in a hot press machine. The tensile force (unit: N) required for separating the two stacked samples was measured. The adhesive force (N/m) = the tensile force /0.025m.

Internal resistance of the lithium-ion battery was tested using an AC voltage drop method. The lithium-ion battery was applied with a current of 1 KHz frequency and 50 mA. The voltages of the lithium-ion battery were sampled. The internal resistance of the lithium-ion battery was calculated through an Operational Amplifier circuit after rectification and filtering.

Cycle performance of the lithium-ion battery was tested according to the following method. At room temperature, 500 cycles of charging and discharging at 0.5C respectively were performed on the lithium-ion battery. The capacity retention rate was calculated using the following formula:

$$\text{capacity retention rate } (\%) = (\text{capacity after 500 cycles/capacity before the cycle test at room temperature}) \times 100 \ (\%) \ .$$

Table 1 summarizes the testing results of the copolymers, the separators and the lithium-ion batteries that were prepared in Examples 1-3 and Comparative Examples 1-4.

Table 1.

|  | Polymer | | Separator | Lithium-ion battery | |
|---|---|---|---|---|---|
|  | Crystallinity degree (%) | Swelling ratio (%) | Interface adhesiveness (N/m) | Internal resistance (mΩ) | Capacity retention rate (%) |
| Example 1 | 45 | 25 | 12 | 30.2 | 89.3 |
| Example 2 | 55 | 20 | 13 | 35.6 | 88.9 |
| Example 3 | 62 | 18 | 11 | 36.9 | 88.7 |
| Comparative Example 1 | 28 | 69 | 4 | 159.1 | 80.1 |
| Comparative Example 2 | 25 | 72 | 5 | 168.2 | 79.2 |
| Comparative Example 3 | 23 | 75 | 0 | 171.1 | 78.1 |
| Comparative Example 4 | 45 | 25 | 4 | 110.0 | 80.5 |

As shown in Table 1, in Examples 1-3, the copolymer used for preparing the separators had higher crystallinity degree and lower swelling ratio than that of the copolymer used in Comparative Examples 1-3. The separators prepared in Examples 1-3 had better interface adhesiveness than those in Comparative Examples 1-3. The lithium-ion batteries prepared in Examples 1-3 had much lower internal resistance and better cycle performance than those in Comparative Examples 3. The separators prepared in Comparative Examples 1-3 had weak interface adhesive property, resulting in high internal resistance and bad cycle performance of the corresponding lithium-ion battery.

In Comparative Example 4, inorganic fillers were added into the coating slurry during the preparation of the separators. As shown in Table 1, the separator prepared in Comparative Example 4 had a lower interface adhesiveness comparing with the separator prepared in Example 1, indicating the inorganic fillers present in the coating layer could reduce the interface adhesiveness of the separator.

**Claims**

1. A coating slurry for preparing a separator for an electrochemical device, comprising:

at least one copolymer comprising a first structural unit and at least one second structural unit, wherein the at least one copolymer has a crystallinity degree ranging from 30% to 70% measured according to a differential scanning calorimetry (DSC);
at least one thickening agent;

at least one binder; and

water;

wherein the coating slurry is absent of inorganic fillers;

wherein the first structural unit is derived from tetrafluoroethylene and the at least one second structural unit is derived from an entity chosen from vinylidene fluoride, acrylic acid methacrylic acid, methyl acrylate, ethyl acrylate, methacrylates, 2-chloroethyl vinyl ether, 2-ethylhexyl acrylate, hydroxyethyl methacrylate, butyl acrylate, butyl methacrylate, trimethylolpropane triacrylate (TMPTA); the at least one copolymer comprises from 0.1 wt% to 20 wt% of the first structural unit derived from tetrafluoroethylene based on the total weight of the at least one copolymer;

the at least one thickening agent comprises polypropylene glycol and sodium carboxymethyl cellulose.

2. The coating slurry according to claim 1, wherein the at least one copolymer has a swelling ratio ranging from 5% to 30% in a nonaqueous electrolyte mixture of ethylene carbonate (EC) , diethyl carbonate (DEC) , and dimethyl carbonate (DMC) with a weight ratio of EC: DEC: DMC=1: 1: 1.

3. The coating slurry according to claim 1, wherein the at least one copolymer is polyvinylidene fluoride-co-tetrafluoroethylene.

4. The coating slurry according to claim 1, wherein the at least one copolymer is in a form of particles having a particle size ranging from 0.1 $\mu$m to 20 $\mu$m.

5. The coating slurry according to claim 1, wherein the coating slurry comprises from 5 wt% to 30 wt% of solid matter, and the solid matter comprises from 70 wt% to 90 wt% of the at least one copolymer, from 1.5 wt% to 4 wt% of the at least one thickening agent, and from 1 wt% to 6 wt% of the at least one binder.

6. The coating slurry according to claim 1, wherein the at least one binder is chosen from polyacrylic acid, polymethacrylic acid, polymethyl acrylate, polyethyl acrylate, pure acrylate emulsion, poly [ (acrylic acid) -co-styrene] , polyvinyl pyrrolidone, styrene-butadiene rubber, epoxy resin, neopentyl glycol diacrylate, sodium polyacrylate, polytetrafluoroethylene, polyimide, polyamide, polyester, cellulose derivatives and polysulfone.

7. The coating slurry according to claim 1, further comprising at least one wetting agent, at least one dispersant and/or at least one antifoaming agent, wherein the at least one wetting agent is chosen from sulfonated oil, fatty acid salt, sodium butyl naphthalene sulfonate, soy lecithin, thiol, hydrazide and thiol acetal; wherein the at least one dispersant is chosen from silicate, alkali metal phosphate, sodium dodecyl sulfate, methylpentanol, cellulose derivative, polyacrylamide, guar gum, and fatty acid polyglycol ester; wherein the at least one antifoaming agent is chosen from glyceryl monostearate, polyoxyethylene glyceryl ether, polyoxypropylene glyceryl ether, polyacrylate, polymethacrylate, emulsified silicone oil, long chain fatty acid ester complex, polyoxyethylene polyoxypropylene pentaerythritol ether, polyoxyethylene polyoxypropylene ether, and polydimethylsiloxane.

8. The coating slurry according to claim 7, wherein the coating slurry comprises from 5 wt% to 30 wt% of solid matter, and the solid matter comprises from 70 wt% to 90 wt% of the at least one copolymer, from 1.5 wt% to 4 wt% of the at least one thickening agent, from 1 wt% to 6 wt% of the at least one binder, from 0.5 wt% to 1.5 wt% of the at least one wetting agent, and from 0.5 wt% to 5wt %of the at least one dispersant.

9. A method for preparing the coating slurry of claim 1, comprising:

mixing the at least one copolymer and the at least one thickening agent to obtain a first mixture;

disperse the first mixture in the water to obtain a second mixture; and

adding the at least one binder into the second mixture.

10. A method for preparing a separator for an electrochemical device, comprising:

preparing a coating slurry according to the method of claim 9;

applying the coating slurry on at least one side of a porous base membrane to obtain a wet coating layer, wherein the porous base membrane comprises a polyolefin-based porous membrane or a non-woven porous membrane; and

removing water from the wet coating layer.

11. A separator for an electrochemical device prepared by the method of claim 10, comprising:

   a porous base membrane; and
   a coating layer being formed on at least one side of the porous base membrane.

12. An electrochemical device comprising a positive electrode, a negative electrode, and a separator according to claim 11 interposed between the positive electrode and the negative electrode.


**Patentansprüche**

1. Beschichtungsschlamm zur Vorbereitung eines Separators für eine elektrochemische Vorrichtung, umfassend:

   mindestens ein Copolymer, das eine erste Struktureinheit und mindestens eine zweite Struktureinheit umfasst, wobei das mindestens eine Copolymer einen Kristallinitätsgrad von 30 % bis 70 % aufweist, gemessen gemäß einer dynamischen Differenzkalorimetrie (DSC);
   mindestens ein Verdickungsmittel;
   mindestens ein Bindemittel; und
   Wasser;
   wobei der Beschichtungsschlamm frei von anorganischen Füllstoffen ist;
   wobei die erste Struktureinheit aus Tetrafluorethylen abgeleitet ist und die mindestens eine zweite Struktureinheit aus einer Einheit abgeleitet ist, die ausgewählt ist aus Vinylidenfluorid, Acrylsäuremethacrylsäure, Methylacrylat, Ethylacrylat, Methacrylate, 2-Chlorethylvinylether, 2-Ethylhexylacrylat, Hydroxyethylmethacrylat, Butylacrylat, Butylmethacrylat, Trimethylolpropantriacrylat (TMPTA); das mindestens eine Copolymer von 0,1 Gew.-% bis 20 Gew.-% der ersten Struktureinheit aus Tetrafluorethylen basierend auf dem Gesamtgewicht des mindestens einen Copolymers umfasst;
   das mindestens eine Verdickungsmittel umfasst Polypropylenglykol und Natriumcarboxymethylcellulose.

2. Beschichtungsschlamm nach Anspruch 1, wobei das mindestens eine Copolymer ein Quellverhältnis von 5 % bis 30 % in einem nichtwässrigen Elektrolytgemisch aus Ethylencarbonat (EC), Diethylcarbonat (DEC) und Dimethylcarbonat (DMC) mit einem Gewichtsverhältnis von EC aufweist: DEC: DMC=1: 1: 1.

3. Beschichtungsschlamm nach Anspruch 1, wobei das mindestens eine Copolymer Polyvinylidenfluorid-Co-Tetrafluorethylen ist.

4. Beschichtungsschlamm nach Anspruch 1, wobei das mindestens eine Copolymer in Form von Partikeln mit einer Partikelgröße von 0,1 $\mu$m bis 20 $\mu$m vorliegt.

5. Beschichtungsschlamm nach Anspruch 1, wobei der Beschichtungsschlamm 5 Gew.-% bis 30 Gew.-% Feststoff und der Feststoff 70 Gew.-% bis 90 Gew.-% des mindestens einen Copolymers, 1,5 Gew.-% bis 4 Gew.-% des mindestens einen Verdickungsmittels und 1 Gew.-% bis 6 Gew.-% des mindestens einen Bindemittels umfasst.

6. Beschichtungsschlamm nach Anspruch 1, wobei das mindestens eine Bindemittel ausgewählt ist aus Polyacrylsäure, Polymethacrylsäure, Polymethylacrylat, Polyethylacrylat, Reinacrylat-Emulsion, Poly [(Acrylsäure)-Co-Styrol], Polyvinylpyrrolidon, StyrolButadien-Kautschuk, Epoxidharz, Neopentylglycoldiacrylat, Natriumpolyacrylat, Polytetrafluorethylen, Polyimid, Polyamid, Polyester, Zellulosederivate und Polysulfon.

7. Beschichtungsschlamm nach Anspruch 1, ferner umfassend mindestens ein Benetzungsmittel, mindestens ein Dispergierungsmittel und/oder mindestens ein Entschäumungsmittel, wobei das mindestens eine Benetzungsmittel aus sulfoniertem Öl ausgewählt ist, Fettsäuresalz, Natriumbutylnaphthalinsulfonat, Sojalecithin, Thiol, Hydrazid und Thiolacetal; wobei das mindestens eine Dispergierungsmittel ausgewählt ist aus Silikat, Alkalimetallphosphat, Natriumdodecylsulfat, Methylpentanol, Zellulosederivat, Polyacrylamid, Guarkernmehl und Fettsäurepolyglykolester; wobei das mindestens eine Antischaummittel ausgewählt ist aus Glycerinmonostearat, Polyoxyethylenglycerylether, Polyoxypropylenglycerylether, Polyacrylat, Polymethacrylat, emulgiertem Silikonöl, langkettigem Fettsäureesterkomplex, Polyoxyethylen-Polyoxypropylen-Pentaerythritolether, Polyoxyethylen, Polyoxypropylenether und Polydimethylsiloxan.

8. Beschichtungsschlamm nach Anspruch 7, wobei der Beschichtungsschlamm 5 Gew.-% bis 30 Gew.-% Feststoff und der Feststoff 70 Gew.-% bis 90 Gew.-% des mindestens einen Copolymers, 1,5 Gew.-% bis 4 Gew.-% des mindestens einen Verdickungsmittels, 1 Gew.-% bis 6 Gew.-% des einen Bindemittels, 0,5 Gew.-% bis 1,5 Gew.-% des mindestens einen Benetzungsmittels und 0,5 Gew.-% bis 5 Gew.-% des mindestens einen Dispergierungsmittels umfasst.

9. Verfahren zur Vorbereitung der Beschichtungsschlämme nach Anspruch 1, umfassend:

das Mischen des mindestens einen Copolymers und des mindestens einen Verdickungsmittels, um eine erste Mischung zu erhalten;
das Dispergieren der ersten Mischung in das Wasser, um eine zweite Mischung zu erhalten; und
Hinzufügen des mindestens einen Bindemittels in die zweite Mischung.

10. Verfahren zur Vorbereitung eines Separators für eine elektrochemische Vorrichtung, umfassend:

Zubereiten eines Beschichtungsschlammes nach dem Verfahren nach Anspruch 9;
Aufbringen des Beschichtungsschlamms auf mindestens eine Seite einer porösen Basismembran, um eine Nassbeschichtung zu erhalten, wobei die poröse Basismembran eine poröse Membran auf Polyolefinbasis oder eine poröse Vliesmembran umfasst; und
Entfernen von Wasser aus der Nassbeschichtung.

11. Separator für eine nach dem Verfahren nach Anspruch 10 hergestellte elektrochemische Vorrichtung, umfassend:

eine poröse Basismembran; und
eine Beschichtungsschicht, die auf mindestens einer Seite der porösen Basismembran gebildet wird.

12. Elektrochemische Vorrichtung, umfassend eine positive Elektrode, eine negative Elektrode und einen Separator nach Anspruch 11, der zwischen der positiven Elektrode und der negativen Elektrode eingelegt ist.

**Revendications**

1. Suspension de revêtement pour la préparation d'un séparateur pour un dispositif électrochimique, comprenant :

au moins un copolymère comprenant un premier motif structurel et au moins un deuxième motif structurel, l'au moins un copolymère présentant un degré de cristallinité allant de 30 % à 70 % mesuré selon une calorimétrie différentielle à balayage (DSC) ;
au moins un agent épaississant ;
au moins un liant ; et
de l'eau ;
dans laquelle la suspension de revêtement est dépourvue de charges inorganiques ;
dans laquelle le premier motif structurel est dérivé de tétrafluoroéthylène et l'au moins un deuxième motif structurel est dérivé d'une entité choisie parmi fluorure de vinylidène, acide acrylique, acide méthacrylique, acrylate de méthyle, acrylate d'éthyle, méthacrylates, 2-chloroéthyl vinyl éther, 2-éthylhexyl acrylate, hydroxyéthyl méthacrylate, acrylate de butyle, méthacrylate de butyle, triacrylate de triméthylolpropane (TMPTA) ; l'au moins un copolymère comprend de 0,1 % en poids à 20 % en poids du premier motif structurel dérivé du tétrafluoroéthylène sur la base du poids total de l'au moins un copolymère ;
l'au moins un agent épaississant comprend du polypropylène glycol et de la carboxyméthylcellulose de sodium.

2. Suspension de revêtement selon la revendication 1, dans laquelle l'au moins un copolymère présente un taux de gonflement allant de 5 % à 30 % dans un mélange électrolytique non aqueux de carbonate d'éthylène (EC), de carbonate de diéthyle (DEC) et de carbonate de diméthyle (DMC) avec un rapport pondéral EC : DEC: DMC=1: 1: 1.

3. Suspension de revêtement selon la revendication 1, dans laquelle l'au moins un copolymère est du fluorure de polyvinylidène-co-tétrafluoroéthylène.

4. Suspension de revêtement selon la revendication 1, dans laquelle l'au moins un copolymère se présente sous la forme de particules ayant une taille de particule allant de 0,1 $\mu$m à 20 $\mu$m.

**5.** Suspension de revêtement selon la revendication 1, dans laquelle la suspension de revêtement comprend de 5 % en poids à 30 % en poids de matière solide, et la matière solide comprend de 70 % en poids à 90 % en poids de l'au moins un copolymère, de 1,5 % en poids à 4 % en poids de l'au moins un agent épaississant, et de 1 % en poids à 6 % en poids de l'au moins un liant.

**6.** Suspension de revêtement selon la revendication 1, dans laquelle l'au moins un liant est choisi parmi acide polyacrylique, acide polyméthacrylique, polyacrylate de méthyle, polyacrylate d'éthyle, émulsion d'acrylate pur, poly [(acide acrylique) -co-styrène], polyvinyle pyrrolidone, caoutchouc styrène-butadiène, résine époxy, diacrylate de néopentyl glycol, polyacrylate de sodium, polytétrafluoroéthylène, polyimide, polyamide, polyester, dérivés de cellulose et polysulfone.

**7.** Suspension de revêtement selon la revendication 1, comprenant en outre au moins un agent mouillant, au moins un dispersant et/ou au moins un agent antimousse, dans laquelle l'au moins un agent mouillant est choisi parmi huile sulfonée, sel d'acide gras, butyl naphtalène sulfonate de sodium, lécithine de soja, thiol, hydrazide et acétal thiol ; dans laquelle l'au moins un dispersant est choisi parmi silicate, phosphate de métal alcalin, dodécyl sulfate de sodium, méthylpentanol, dérivé de cellulose, polyacrylamide, gomme de guar et ester de polyglycol d'acide gras ; dans laquelle l'au moins un agent antimousse est choisi parmi monostéarate de glycéryle, polyoxyéthylène glycéryl éther, polyoxypropylène glycéryl éther, polyacrylate, polyméthacrylate, huile de silicone émulsifiée, complexe d'ester d'acide gras à chaîne longue, polyoxyéthylène polyoxypropylène pentaérythritol éther, polyoxyéthylène polyoxypropylène éther et polydiméthylsiloxane.

**8.** Suspension de revêtement selon la revendication 7, dans laquelle la suspension de revêtement comprend de 5 % en poids à 30 % en poids de matière solide, et la matière solide comprend de 70 % en poids à 90 % en poids de l'au moins un copolymère, de 1,5 % en poids à 4 % en poids de l'au moins un agent épaississant, de 1 % en poids à 6 % en poids de l'au moins un liant, de 0,5 % en poids à 1,5 % en poids de l'au moins un agent mouillant, et de 0,5 % en poids à 5 % en poids de l'au moins un dispersant.

**9.** Procédé de préparation de la suspension de revêtement selon la revendication 1, comprenant :

le mélange de l'au moins un copolymère et de l'au moins un agent épaississant pour obtenir un premier mélange ;
la dispersion du premier mélange dans l'eau pour obtenir un second mélange ; et
l'ajout de l'au moins un liant dans le second mélange.

**10.** Procédé : de préparation d'un séparateur pour un dispositif électrochimique, comprenant :

la préparation d'une suspension de revêtement selon le procédé de la revendication 9 ;
l'application de la suspension de revêtement sur au moins un côté d'une membrane de base poreuse pour obtenir une couche de revêtement humide, dans laquelle la membrane de base poreuse comprend une membrane poreuse à base de polyoléfine ou une membrane poreuse non tissée ; et
l'élimination de l'eau de la couche de revêtement humide.

**11.** Séparateur pour un dispositif électrochimique préparé par le procédé selon la revendication 10, comprenant :

une membrane de base poreuse ; et
une couche de revêtement formée sur au moins un côté de la membrane de base poreuse.

**12.** Dispositif électrochimique comprenant une électrode positive, une électrode négative et un séparateur selon la revendication 11 interposé entre l'électrode positive et l'électrode négative.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810288160
- US 2015280196 A1
- EP 3070764 A1